# EUROPÄISCHE PATENTSCHRIFT

(11) **EP 1 505 381 B1**
(45) Veröffentlichungstag und Bekanntmachung des Hinweises auf die Patenterteilung: **24.10.2007**
(21) Anmeldenummer: 04450141.9
(22) Anmeldetag: 08.07.2004
(51) Int. Cl.: G01N 7/00, G01N 27/06

(54) **Verfahren zur Detektion einer Gasblase in einer Flüssigkeit**
Method for detection of a bubble in a liquid
Procédé de detection de bulles dans un liquide

(30) Priorität: 07.08.2003 AT 12502003
(43) Veröffentlichungstag der Anmeldung: 09.02.2005
(73) Patentinhaber: F. HOFFMANN-LA ROCHE AG, 4070 Basel (CH)
(72) Erfinder: Gruebler, Robert, Dr., 8042 Graz (AT); Landschützer, Egon, Ing., 8051 Graz (AT); Steinböck, Wolf-Dietrich, Ing., 8020 Graz (AT)
(74) Vertreter: Babeluk, Michael

(56) Entgegenhaltungen:
- EP-A- 1 182 264
- WO-A-01/33195
- DE-C1- 3 927 718
- US-A- 4 358 423
- PATENT ABSTRACTS OF JAPAN Bd. 2000, Nr. 10, 17. November 2000 (2000-11-17) & JP 2000 199763 A (SYSMEX CORP), 18. Juli 2000 (2000-07-18)

## Beschreibung

Die Erfindung betrifft ein Verfahren zur Detektion einer Gasblase, beispielsweise einer Luftblase, in einer mit einer Flüssigkeit, vorzugsweise einer Proben-, Qualitätskontroll- oder Kalibrierflüssigkeit, gefüllten Messkammer, welche zumindest eine Messeinrichtung oder einen Sensor zur Bestimmung eines chemischen oder physikalischen Parameters der Flüssigkeit aufweist.

Bei mit Flüssigkeiten, insbesondere mit biologischen Flüssigkeiten wie Vollblut, Serum, Harn, etc. gefüllten Messkammern, beispielsweise von Blutgasanalysatoren, können Probleme bei der Probenmessung bzw. bei der Kalibrierung oder Qualitätskontrolle auftreten, wenn die Probe bzw. das Qualitätskontroll- oder Kalibriermittel die Messkammer nur unvollständig füllt oder wenn sich in der Flüssigkeit im Bereich der Sensoren Gasblasen, beispielsweise Luftblasen, befinden. Insbesondere bei Messkammern mit kleinem Probenvolumen, welche meist kapillarförmig ausgebildet sein können, führen Luftblasen zu Fehlmessungen, so dass im Hinblick auf das Vorhandensein oder Fehlen von Luftblasen eine wirksame Überprüfung durchgeführt werden muss.

So wird bereits in der US 4,358,423 A auf das Problem von eingeschlossenen Luftblasen hingewiesen, welche das Messresultat verfälschen, da die Luftblasen eine ausreichende Benetzung der Oberfläche der jeweils eingesetzten Sensoren verhindern. Maßnahmen, die einen derartigen Fehler erkennen, sind insbesondere bei automatisch arbeitenden Analysatoren notwendig, bei welchen der Füllvorgang der Messkapillare bzw. die Blasenfreiheit der Probe in der Messkammer automatisch kontrolliert werden muss. In der US 4,358,423 wird zur Lösung des Problems ein Verfahren vorgeschlagen, bei welchem der Wert des Widerstandes zwischen wenigstens zwei Stellen in der Messkammer gemessen wird, wobei der Füllvorgang der Messkammer in Abhängigkeit der festgestellten Größe des gemessenen Widerstandes gesteuert wird.

Im Verlauf der Messkammer können drei Kontaktstellen für die Messung des elektrischen Widerstandes vorgesehen sein, wobei mit Hilfe eines Umschalters jeweils ein Paar der Kontakte, d.h. entweder der erste und der zweite Kontakt oder der zweite und der dritte Kontakt zur Widerstandsmessung herangezogen werden. Bei einer mit Luftblasen behafteten Füllung der Messkammer kommt zunächst die elektrische Verbindung zwischen dem ersten und dem zweiten Kontakt zu Stande, diese wird jedoch durch die eingeschlossene Luftblase wieder unterbrochen, bevor die Strecke zwischen dem zweiten und dem dritten Kontakt elektrisch leitend wird. Das daraus abgeleitet elektrische Signal kann dazu herangezogen werden, den Füllvorgang abzubrechen und eine Störung zu signalisieren.

Mit dem beschriebenen Verfahren können allerdings Luftblasen, die den Querschnitt des Messkanals bzw. der Messkapillare nur teilweise ausfüllen, nicht wirksam detektiert werden. Die Widerstandsmessung würde in einem derartigen Fall zwar geringfügige Unterschiede im Messsignal aufzeigen, welche allerdings von Signaländerungen basierend auf unterschiedlicher Leitfähigkeit der einzelnen Proben - bedingt durch z.B. unterschiedliche Hämatokritwerte - nicht unterschieden werden können.

Aus der WO 01/33195 A1 ist ein Verfahren und eine Vorrichtung zur Blasendetektion in einer Flüssigkeit bekannt geworden, bei welcher sich die Flüssigkeit beispielsweise in Kontakt mit einem pO₂- oder einen pCO₂-Sensor befindet. Zur Überprüfung, ob eine Gasblase im Bereich des Sensors vorliegt, wird nun bei einem ersten Druckwert in der Messkammer ein erster Messwert für die Gaskonzentration durchgeführt und anschließend der Druck auf einen zweiten Druckwert in der Messkammer geändert. Auch bei diesem zweiten Druckwert wird die gaskonzentration gemessen und einer zweiter Messwert erstellt. Dieser zweite Messwert wird mit einem Erwartungswert beim geänderten Druck verglichen und je nach Differenz der beiden Werte auf das Vorhandensein von Gasblasen geschlossen. Die Nachteile beim Verfahren nach der WO 01/33195 A1 bestehen darin, dass die Anwendung auf die Verwendung von Gassensoren eingeschränkt ist. Falls sich die Luftblase im Bereich anderer Sensoren in der Messkammer befindet, kann diese durch die genannte Methode nicht detektiert werden. Weiters ist es auch möglich, dass eine im Bereich des Gassensors vorhandene Luftblase durch die Änderung des Druckes aus dem sensitiven Bereich der Elektrode verschoben wird und dadurch zusätzliche Messkomponenten auftreten, welche das Messergebnis verfälschen.

Die Schrift EP-A-1 182 264 beschreibt ein Verfahren zur Bestimmung der Leitfähigkeit einer Flüssigkeit, wobei zusätzlich zu einer ultrasonischen Luftblasendetektion, es auch möglich ist in Abhängigkeit von einer durch eine Druckänderung erzeugte Änderung in dem Leitfähigkeitsmesswert auf das Vorhandensein von Luftblasen in der Leitfähigkeitsmessstrecke zu schließen, welche die Messung stören können.

Schließlich ist aus der EP 0 484 876 B1 eine Einrichtung zum dynamischen Messen des Blasengehalts einer fließenden Flüssigkeit bekannt, welche eine Einrichtung zum Messen des Druckes, der Temperatur und der volumetrischen Durchflussrate der Flüssigkeit aufweist, wobei die Durchflussrate zwischen Punkten eines hohen und eines niedrigen Druckes gemessen und daraus der Blasengehalt der Flüssigkeit berechnet wird. Das Verfahren nützt im Wesentlichen die aus der Druckänderung resultierende Volumsänderung der Flüssigkeit aus, welche abhängig vom Blasengehalt ist.

Aufgabe der vorliegenden Erfindung ist es, ein Verfahren zur Detektion einer Gasblase in einer mit einer Flüssigkeit gefüllten Messkammer derart zu verbessern, dass unabhängig von den verwendeten Sensoren in der Messkammer eine rasche und präzise Aussage über das Vorliegen bzw. Fehlen von Gasblasen, insbesondere Luftblasen in der zu vermessenden Flüssigkeit erzielbar ist. Weiters soll trotz zusätzlicher Überprüfung der gewohnte Messablauf weitgehend unverändert beibehalten werden können.

Diese Aufgabe wird erfindungsgemäß dadurch gelöst, dass die elektrische Leitfähigkeit (bzw. Impedanz, Widerstand) der Flüssigkeit oder eine davon abgeleitete Größe bei einem ersten Druckwert p₁ in der Messkammer gemessen und damit ein erster Messwert S₁ erfasst wird, dass der Druck in der Messkammer geändert wird, dass die elektrische Leitfähigkeit der Flüssigkeit oder eine davon abhängige Größe bei zumindest einem zweiten Druckwert p₂ gemessen und damit ein zweiter Messwert S₂ erfasst wird, sowie das aus einem Vergleich der beiden Messwerte S₁ und S₂ auf das Vorliegen bzw. Fehlen einer Gasblase in der Flüssigkeit geschlossen wird. Das erfindungsgemäße Verfahren nützt die Tatsache, dass durch die Änderung des Druckes eine Änderung beispielsweise der Leitfähigkeit der Flüssigkeit einhergeht, wenn Gasblasen in der Flüssigkeit vorhanden sind. Das erfindungsgemäße Verfahren ist nicht auf die Verwendung von Gassensoren eingeschränkt und kann auf sehr einfache Weise in Messkammern angewandt werden, welche bereits für die Kontrolle des Befüllvorganges mit Elektroden zur Leitfähigkeitsmessung ausgestattet sind. Das erfindungsgemäße Verfahren ist somit ohne zusätzliche Einbauten in der Messkammer realisierbar.

Erfindungsgemäß kann beispielsweise ein normierter Differenzwert aus den beiden Messwerten S₁ und S₂, beispielweise ΔS/S₁, gebildet und durch den Vergleich mit einem Schwellwert auf das Vorliegen bzw. Fehlen einer Gasblase in der Flüssigkeit geschlossen werden.

Weiters ist es möglich das Verhältnis der Messwerte S₂/S₁ zu bilden und durch den Vergleich mit einem Schwellwert auf das Vorliegen bzw. Fehlen einer Gasblase in der Flüssigkeit zu schließen.

Besonders vorteilhaft ist es, nach der Druckänderung in der Messkammer den zeitliche Verlauf des Messwertes der elektrischen Leitfähigkeit oder einer davon abhängigen Größe zu bestimmen und durch den Vergleich eines zeitlich extrapolierten Wertes mit einem Schwellwert auf das Vorliegen bzw. Fehlen einer Gasblase in der Flüssigkeit zu schließen. Falls erforderlich, können somit die erfassten Messwerte auf zeitliche Bereiche außerhalb des Messfensters extrapoliert werden (beispielsweise mit Hilfe vorgegebener Kurvenmodelle).

Beispielsweise kann ein Schwellwert für den normierten Differenzwert ΔS/S₁ vorgegeben und beim Unterschreiten des Schwellwertes das Vorliegen einer Gasblase angezeigt werden. Je nach Art und Grundeinstellung des Analysators kann dann beispielsweise die Probe verworfen und automatisch eine neuer Probennahmezyklus gestartet werden.

Obwohl es auch möglich wäre, für den zweiten Messwert den Druck in der Messkammer um ca. 100 bis 300 mbar zu erhöhen, lässt sich die Blasendetektion besonders gut in den normalen Messablauf eines Analysators integrieren, wenn die Änderung des Druckes in der Probenkammer erfindungsgemäß in der Form einer Druckabsenkung, im Bereich von 100 bis 400 mbar, vorzugsweise um ca. 250 mbar, durchgeführt wird. Konkret kann für die Blasendetektion beispielsweise der Beginn des Waschvorganges der Messzelle herangezogen werden.

Bei einer Änderung des Druckes kann es durch die Bewegung der Flüssigkeitssäule zu Änderungen der Leitfähigkeit in der Probe, beispielsweise einer Blutprobe, kommen. Es ist deshalb von Vorteil, wenn nach der Änderung des Druckes und vor der Erfassung des zweiten Messwertes S₂ eine Wartezeit eingehalten wird.

Um Veränderungen des Gaspartialdruckes der Flüssigkeit bei einer raschen Druckänderung auszuschließen, ist es von Vorteil, wenn die Gasblasendetektion in der Flüssigkeit nach der eigentlichen Bestimmung eines chemischen oder physikalischen Parameters der Flüssigkeit durchgeführt wird.

Erfindungsgemäß sind zur Messung der elektrischen Leitfähigkeit oder einer davon abgeleiteten Größe elektrische Kontaktstellen am Messzelleneingang und am Messzellenausgang in Verwendung. Es ist auch möglich die elektrische Leitfähigkeit oder eine davon abgeleitete Größe in Bezug auf zumindest eine weitere Kontaktstelle zwischen Messzelleneingang und Messzellenausgang zu messen, wobei die Leitfähigkeitswerte zumindest zweier Abschnitte der Messzelle verglichen und damit eine Lokalisation einer allfälligen Gasblase durchgeführt werden kann.

Die Erfindung wird im Folgenden anhand von Zeichnungen näher erläutert. Es zeigen
- Fig. 1: eine Vorrichtung zur Durchführung des erfindungsgemäßen Verfahrens zur Detektion einer Gasblase in einer mit einer Flüssigkeit gefüllten Messkammer; sowie die
- Fig. 2: bis Fig. 4 Messdiagramme unterschiedlicher Proben- und Qualitätskontrollflüssigkeiten mit bzw. ohne eingeschlossener Luftblase.

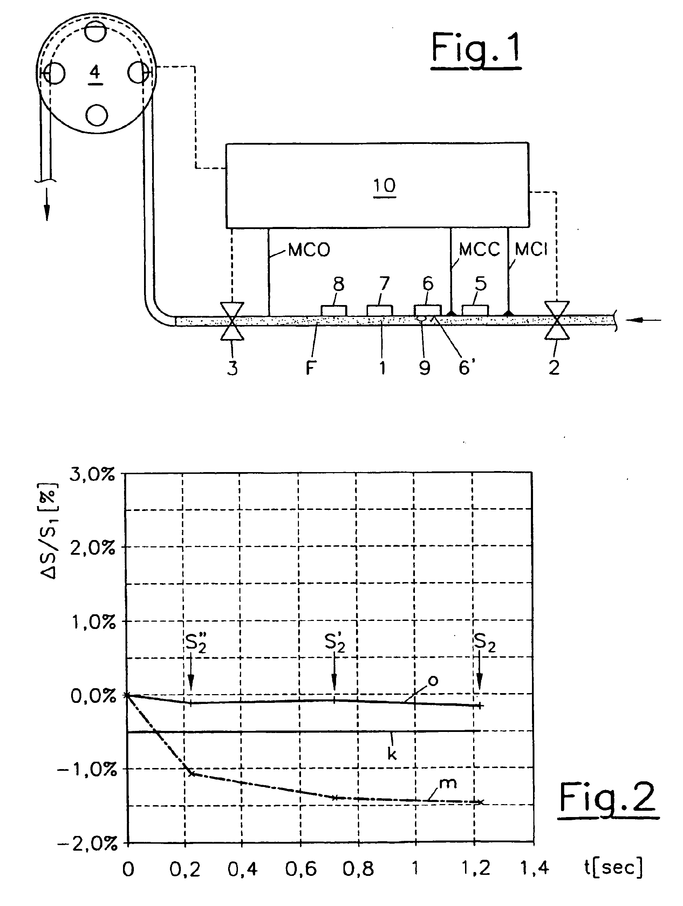

Fig. 1 zeigt in schematischer Darstellung eine mit einer Proben- oder Kalibrierflüssigkeit F gefüllte Messkammer 1, welche beispielsweise als Durchflussmesskammer ausgeführt sein kann. Die Messkammer 1 weist eingangsseitig ein Einlassventil 2 und ausgangsseitig ein Auslassventil 3 auf, wobei der Probentransport mit Hilfe einer Schlauchpumpe 4 bewerkstelligt wird. Die Messkammer 1 weist mehrere Sensoren 5 bis 8 auf, welche mit der Flüssigkeit F in der Messkammer 1 in Kontakt stehen. Die Messkammer kann auch eine optische Vorrichtung zur Messung einer physikalischen oder chemischen Größe, beispielsweise der Hämoglobinkonzentration, aufweisen, wie z.B. in der EP 0 818 682 A2 oder in der EP 1 054 252 A2 dargelegt.

Im Bereich der sensitiven Fläche 6' des Sensors 6 ist eine Luftblase 9 dargestellt, welche bei Nichterkennen den Messwert dieses Sensors verfälscht. Eingangsseitig als auch ausgangsseitig der Messkammer 1 befindet sich elektrische Kontaktstellen MCI bzw. MCO, welche mit der Auswerte- und Steuereinheit 10 verbunden sind. Weitere Kontaktstellen zwischen Messzelleneingang und Messzellenausgang bzw. zwischen den Kontakten MCI und MCO sind möglich, beispielsweise kann eine Kontaktstelle MCC zwischen den Sensoren 5 und 6 angeordnet sein. Zur Messung der elektrischen Leitfähigkeit, des elektrischen Widerstandes oder einer davon abgeleiteten Größe entsteht somit eine Messstrecke über die gesamte Messkammer 1 oder über einen Teil der Messkammer, je nachdem zwischen welchen der Kontaktstellen die Leitfähigkeit gemessen wird. Die beschriebene Anordnung der Kontaktstellen eignet sich auch zur Füllstandsmessung der Messzelle, welche allerdings nicht Gegenstand der vorliegenden Erfindung ist.

Für die Blasendetektion wird nun nach dem eigentlichen Vermessen der Probenflüssigkeit F mit Hilfe der Sensoren 5 bis 8 eine sogenannte Expansionsprüfung durchgeführt. Konkret wird dabei bei geschlossenen Ventilen 2 und 3 ein erster Leitfähigkeitsmesswert S₁ beim Druck p₁ (z.B. bei Atmosphärendruck) erfasst und mit der Schlauchpumpe 4 ein Saugdruck vor der Messzelle aufgebaut, welcher je nach Laufzeit der Pumpe und Volumen des Leitungssystems im Bereich von 100 bis 400 mbar, vorzugsweise bei ca. 250 mbar liegt. Danach wird das saugseitige Ventil 3 geöffnet, so dass der Unterdruck zur Wirkung gelangt. Danach erfolgt nach kurzer Wartezeit von z.B. 0,2 s - um Bewegungen der Flüssigkeitssäule aufgrund des Druckwechsels abklingen zu lassen - bei verringertem Druck in der Messzelle eine Leitfähigkeitsmessung S₂", nach ca. 0,5 s eine Leitfähigkeitsmessung S₂' und schließlich nach weiteren 0,5 s (gesamt ca. 1,2 s nach Öffnung des Ventils 2) eine Leitfähigkeitsmessung S₂. Die letzte dieser Messungen S₂ wird zur Basismessung S₁ ins Verhältnis gesetzt und dieser Quotient bewertet.

Es ist auch möglich - wie in den Diagrammen Fig. 2 bis Fig. 4 dargestellt - die Leitfähigkeit bei geändertem Druck p₂ als Δ%-Wert bezogen auf die Leitfähigkeit S₁ beim Ausgangsdruck p₁ in der Form ΔS/S₁ anzugeben.

In den Diagrammen gemäß Fig. 2 bis Fig. 4 ist der normierter Differenzwert aus den beiden Messwerten ΔS/S₁ in Prozent in Abhängigkeit der Zeit t aufgetragen. Weiters ist ein Schwellwert k eingetragen bei dessen Unterschreitung das Vorhandensein einer Luft- bzw. Gasblase festgestellt wird.

In der Fig. 2 sind die Verhältnisse bei der Vermessung einer Qualitätskontrollflüssigkeit mit Luftblase (Kurve m) bzw. ohne Luftblase (Kurve o) dargestellt. Deutlich ist für die Kurve m ein Leitfähigkeitsabfall im Prozentbereich erkennbar, welcher als signifikant für das Vorhandensein einer Luftblase anzusehen ist.

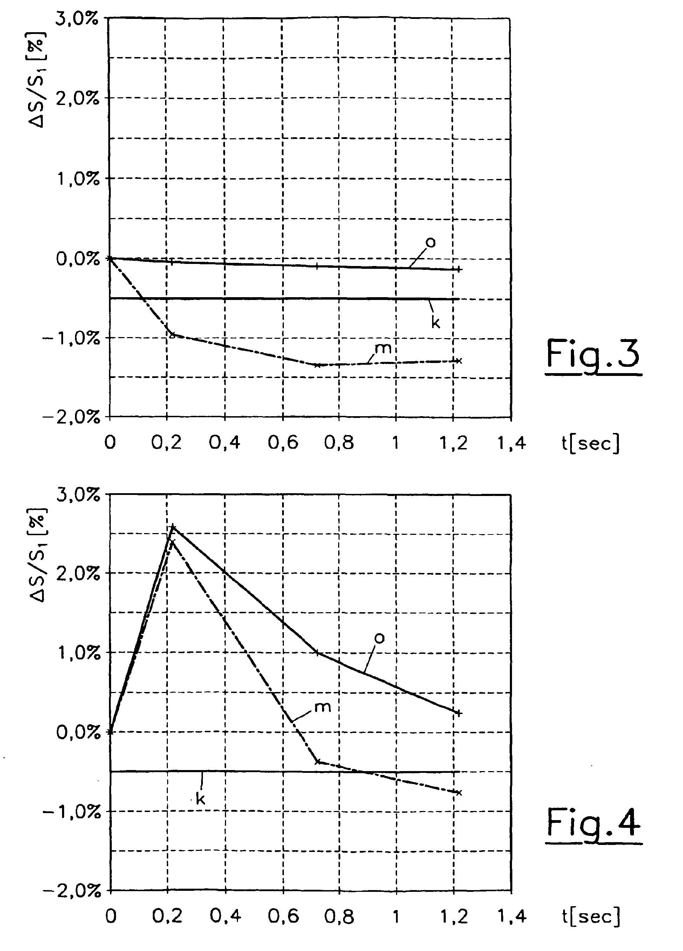

In Fig. 3 ist die Kontrollmessung am Beispiel einer Plasmaprobe dargestellt, wobei m die Messkurve mit und o die Messkurve ohne Gasblase kennzeichnet.

Schließlich zeigt Fig. 4 die Messsituation für eine Blutprobe. Hier ist zunächst sowohl für die Blutprobe mit (m) als auch für die Blutprobe ohne (o) Gasblase ein Anstieg der Leitwerte erkennbar, welcher in der verwendeten Messanordnung durch eine durch die Druckverminderung hervorgerufene Bewegung der Flüssigkeit und der daraus resultierenden Veränderung der räumlichen Orientierung der Blutzellen hervorgerufen wird. Ähnliche Effekte sind auch bei anderen wässrigen Emulsionen und bei Suspensionen zu erwarten. Nach einiger Zeit nähern sich die Messwerte der Blutprobe ohne Gasblase wieder dem Ausgangswert an, wo hingehend die Messwerte der Blutprobe mit Gasblase unter den Schwellwert k abfallen. Der zeitliche Verlauf der Messkurven kann auch über den eigentlichen Messbereich hinaus extrapoliert werden.

## Patentansprüche

1. Verfahren zur Detektion einer Gasblase (9), beispielsweise einer Luftblase, in einer mit einer Flüssigkeit (F), vorzugsweise einer Proben-, Qualitätskontroll- oder Kalibrierflüssigkeit, gefüllten Messkammer(1), welche zumindest eine Messeinrichtung oder einen Sensor (5, 6, 7, 8) zur Bestimmung eines chemischen oder physikalischen Parameters der Flüssigkeit aufweist, und zur Messung der elektrischen Leitfähigkeit oder einer davon abgeleiteten Größe zusätzlich elektrische Kontaktstellen (MCI, MCO) eingangsseitig und ausgangsseitig der Messkammer (1) verwendet werden, **dadurch gekennzeichnet, dass** die elektrische Leitfähigkeit der Flüssigkeit (F) oder eine davon abgeleitete Größe bei einem ersten Druckwert p₁ in der Messkammer (1) gemessen und damit ein erster Messwert S₁ erfasst wird, dass der Druck in der Messkammer (1) geändert wird, dass die elektrische Leitfähigkeit der Flüssigkeit oder eine davon abhängige Größe bei zumindest einem zweiten Druckwert p₂ gemessen und damit ein zweiter Messwert S₂ erfasst wird, sowie das aus einem Vergleich der beiden Messwerte S₁ und S₂ auf das Vorliegen bzw. Fehlen einer Gasblase (9) in der Flüssigkeit geschlossen wird.

2. Verfahren nach Anspruch 1, **dadurch gekennzeichnet, dass** ein normierter Differenzwert aus den beiden Messwerten S₁ und S₂, beispielweise ΔS/S₁, gebildet und durch den Vergleich mit einem Schwellwert auf das Vorliegen bzw. Fehlen einer Gasblase (9) in der Flüssigkeit (F) geschlossen wird.

3. Verfahren nach Anspruch 1, **dadurch gekennzeichnet, dass** das Verhältnis der Messwerte S₂/S₁ gebildet und durch den Vergleich mit einem Schwellwert auf das Vorliegen bzw. Fehlen einer Gasblase (9) in der Flüssigkeit (F) geschlossen wird.

4. Verfahren nach Anspruch 1, **dadurch gekennzeichnet, dass** nach der Druckänderung in der Messkammer (1) der zeitliche Verlauf des Messwertes der elektrischen Leitfähigkeit oder einer davon abhängigen Größe bestimmt und durch den Vergleich eines zeitlich extrapplierten Wertes mit einem Schwellwert auf das Vorliegen bzw. Fehlen einer Gasblase (9) in der Flüssigkeit (F) geschlossen wird.

5. Verfahren nach einem der Ansprüche 1 bis 4, **dadurch gekennzeichnet, dass** die Änderung des Druckes in der Messkammer (1) in Form einer Druckerhöhung um 100 bis 300 mbar oder in Form einer Druckabsenkung im Bereich von 100 bis 400 mbar, vorzugsweise um ca. 250 mbar, durchgeführt wird.

6. Verfahren nach einem der Ansprüche 1 bis 5, **dadurch gekennzeichnet, dass** nach der Änderung des Druckes und vor der Erfassung des zweiten Messwertes S₂ eine Wartezeit eingehalten wird.

7. Verfahren nach einem der Ansprüche 1 bis 6, **dadurch gekennzeichnet, dass** die Detektion einer Gasblase (9) in der Flüssigkeit (F) nach der eigentlichen Bestimmung eines chemischen oder physikalischen Parameters der Flüssigkeit durchgeführt wird.

8. Verfahren nach einem der Ansprüche 1 bis 7, **dadurch gekennzeichnet, dass** die elektrische Leitfähigkeit oder eine davon abgeleitete Größe in Bezug auf zumindest eine weitere Kontaktstelle (MCC) zwischen Messzelleneingang und Messzellenausgang gemessen wird.

9. Verfahren nach Anspruch 8, **dadurch gekennzeichnet, dass** die Leitfähigkeitswerte zumindest zweier Abschnitte der Messzelle (1) verglichen und damit eine Lokalisation der Gasblase durchgeführt wird.

## Claims

1. A method for defecting a gas bubble (9), e.g. an air bubble, in a measuring chamber (1) filled with a liquid (F), preferably a specimen, quality-control or calibrating liquid, which chamber comprises at least one measuring device or a sensor (5, 6, 7, 8) for determining a chemical or physical parameter of the liquid, and for measuring the electric conductivity or a variable derived therefrom electric contact points (MCI, MCO) are used additionally on the input side and output side of the measuring chamber (1), **characterized in that** the electric conductivity of the liquid (F) or a variable derived therefrom is measured in the measuring chamber (1) at a first pressure value p₁ and thus a first measured value S₁ is detected, that the pressure in the measuring chamber (1) is changed, that the electric conductivity of the liquid or a variable depending thereon is measured at at least a second pressure value p₂ and thus a second measured value S₂ is detected, and that from a comparison of the two measured values S₁ and S₂ the presence or lack of presence of a gas bubble (9) in the liquid is deduced.

2. A method according to claim 1, **characterized in that** a normalized differential value is formed from the two measured values S₁ and S₂, e.g. ΔS/S₁, and the presence or lack of presence of a gas bubble (9) in the liquid (F) is deduced by the comparison with a threshold value.

3. A method according to claim 1, **characterized in that** the ratio of the measured values S₂/S₁ is formed and the presence or lack of presence of a gas bubble (9) in the liquid (F) is deduced by the comparison with a threshold value.

4. A method according to claim 1, **characterized in that** after the change in pressure in the measuring chamber (1) the time progress of the measured value of the electric conductivity or a variable dependent thereon is determined and the presence or lack of presence of a gas bubble (9) in the liquid (F) is deduced by the comparison of a time-extrapolated value with a threshold value.

5. A method according to one of the claims 1 to 4, **characterized in that** the change in the pressure in the measuring chamber (1) is performed in the form of a pressure increase by 100 to 300 mbar or in the form of a pressure decrease in the region of 100 to 400 mbar, preferably by approximately 250 mbar.

6. A method according to one of the claims 1 to 5, **characterized in that** a waiting time is observed after the change of the pressure and prior to the detection of the second measured value S₂.

7. A method according to one of the claims 1 to 6, **characterized in that** the detection of a gas bubble (9) in the liquid (F) is performed after the actual determination of a chemical or physical property of the liquid.

8. A method according to one of the claims 1 to 7, **characterized in that** the electric conductivity or a value derived therefrom is measured with respect to at least one further contact point (MCC) between the entrance and exit of the measuring cell.

9. A method according to claim 8, **characterized in that** the conductivity values of at least two sections of the measuring cell (1) are compared and thus a localization of the gas bubble is performed.

## Revendications

1. Procédé pour détecter une bulle de gaz (9), par exemple une bulle d'air, dans une chambre de mesure (1) remplie d'un liquide (F), de préférence d'un liquide d'échantillon, de contrôle de qualité ou d'étalonnage, qui présente au moins un dispositif de mesure ou un capteur (5, 6, 7, 8) pour la détermination d'un paramètre chimique ou physique du liquide, et des points de contact (MCI, MCO) électriques étant utilisés côté entrée et côté sortie de la chambre de mesure (1) pour la mesure de la conductibilité électrique ou d'une partie dérivée de celle-ci, **caractérisé en ce que** la conductibilité électrique du liquide (F) ou une grandeur dérivée de celle-ci est mesurée avec une première valeur de pression p₁ dans la chambre de mesure (1) et que de ce fait une première valeur mesurée S₁ est enregistrée, **en ce que** la pression dans la chambre de mesure (1) est modifiée, **en ce que** la conductibilité électrique du liquide ou une grandeur dépendante de celle-ci est mesurée avec au moins une seconde valeur de pression p₂ et de ce fait une seconde valeur mesurée S₂ est enregistrée, et **en ce que**, à partir d'une comparaison des deux valeurs mesurées S₁ et S₂, on conclut à la présence ou à l'absence d'une bulle de gaz (9) dans le liquide.

2. Procédé selon la revendication 1, **caractérisé en ce qu'**une valeur différentielle normalisée est formée à partir des deux valeurs de mesure S₁ et S₂, par exemple ΔS/S₁, et par la comparaison avec une valeur seuil, on conclut à la présence ou à l'absence d'une bulle de gaz (9) dans le liquide (F).

3. Procédé selon la revendication 1, **caractérisé en ce que** le rapport des valeurs mesurées S₂/S₁ est formé et, par la comparaison avec une valeur seuil, on conclut à la présence ou à l'absence d'une bulle de gaz (9) dans le liquide (F).

4. Procédé selon la revendication 1, **caractérisé en ce que** la courbe dans le temps de la valeur de mesure de la conductibilité électrique ou d'une grandeur dépendante de celle-ci est déterminée après la variation de pression dans la chambre de mesure (1) et, par la comparaison d'une valeur extrapolée dans le temps avec une valeur seuil, on conclut à la présence ou à l'absence d'une bulle de gaz (9) dans le liquide (F).

5. Procédé selon l'une quelconque des revendications 1 à 4, **caractérisé en ce que** la variation de la pression dans la chambre de mesure (1) est effectuée sous forme d'une élévation de pression de 100 à 300 mbars ou sous la forme d'un abaissement de pression dans la plage de 100 à 400 mbars, de préférence autour d'environ 250 mbars.

6. Procédé selon l'une quelconque des revendications 1 à 5, **caractérisé en ce qu'**un délai d'attente est respecté après la variation de la pression et avant l'enregistrement de la seconde valeur mesurée S₂.

7. Procédé selon l'une quelconque des revendications 1 à 6, **caractérisé en ce que** la détection d'une bulle d'air (9) dans le liquide (F) est effectuée après la détermination proprement dite d'un paramètre chimique ou physique du liquide.

8. Procédé selon l'une quelconque des revendications 1 à 7, **caractérisé en ce que** la conductibilité électrique ou une grandeur dérivée de celle-ci est mesurée par rapport à au moins un autre point de contact (MCC) entre l'entrée de la cellule de mesure et la sortie de la cellule de mesure.

9. Procédé selon la revendication 8, **caractérisé en ce que** les valeurs de conductibilité d'au moins deux parties de la cellule de mesure (1) sont comparées et une localisation de la bulle de gaz est ainsi effectuée.
